# EUROPÄISCHE PATENTSCHRIFT

(11) **EP 3 349 151 B1**
(45) Veröffentlichungstag und Bekanntmachung des Hinweises auf die Patenterteilung: **06.11.2019**
(21) Anmeldenummer: 17150949.0
(22) Anmeldetag: 11.01.2017
(51) Int. Cl.: G06K 19/073, H01H 13/702

(54) **DOPPELSEITIGER TASTER MIT TOUCHFUNKTION**
DOUBLE-SIDED KEY SWITCH WITH TOUCH FUNCTION
BOUTON-POUSSOIR DOUBLE FACE AYANT UNE FONCTION TACTILE

(43) Veröffentlichungstag der Anmeldung: 18.07.2018
(73) Patentinhaber: Khaled Asef, Mohammad, 1090 Wien (AT)
(72) Erfinder: Khaled Asef, Mohammad, 1090 Wien (AT); Stöttinger, Ernst, 1090 Wien (AT); Jilch, Valentin, 2380 Perchtholdsdorf (AT)
(74) Vertreter: Schwarz & Partner Patentanwälte OG

(56) Entgegenhaltungen:
- WO-A1-2010/035705
- WO-A1-2014/114743
- US-A1- 2008 099 556
- US-A1- 2015 097 038
- Patrick Dax: "Start-up bringt universelle Kreditkarte mit Touchscreen - futurezone.at", , XP055390262, Gefunden im Internet: URL:https://futurezone.at/thema/start-ups/ start-up-bringt-universelle-kreditkarte-mi t-touchscreen/231.322.841 [gefunden am 2017-07-12]
- Sandra Wobrazek: "Handcheque: Diese Karte macht dein Geldtascherl schlank", , 5. Dezember 2016 (2016-12-05), XP055390258, Gefunden im Internet: URL:https://www.trendingtopics.at/schluss- mit-dem-platzproblem-in-der-geldboerse/ [gefunden am 2017-07-12]

## Beschreibung

Die Erfindung betrifft einen Taster, umfassend einen ersten Schaltkontakt und einen zweiten Schaltkontakt, welche voneinander beabstandet und parallel zueinander angeordnet sind, wobei der erste Schaltkontakt ausgebildet ist, unter Krafteinwirkung eine elektrische Leitungsverbindung mit dem zweiten Schaltkontakt herzustellen.

Taster sind Bedienelemente, welche an einer Vielzahl elektronischer Geräte, wie beispielsweise Mobiltelefonen, Computertastaturen und Bedienfeldern im Einsatz sind.

Herkömmliche Taster sind mechanische Vorrichtungen, welche mittels Krafteinwirkung bedient werden. Sie verfügen über einen stabilen Ausgangszustand, sowie einen metastabilen Zustand, wobei der Übergang vom Ausgangszustand in den metastabilen Zustand durch mechanische Krafteinwirkung auf den ersten Schaltkontakt realisiert wird. Wirkt auf den ersten Schaltkontakt keine Kraft, so befindet sich der Taster im Ausgangszustand. In diesem liegen der erste und der zweite Schaltkontakt beabstandet zueinander. Bei Betätigung des Tasters werden diese, im metastabilen Zustand, in Berührung gebracht, und eine elektrische Leitungsverbindung wird hergestellt. Endet die Krafteinwirkung auf den ersten Schaltkontakt, geht der Taster eigenständig in den Ausgangszustand über, und die elektrische Leitungsverbindung wird getrennt. Taster gemäß dem Stand der Technik werden beispielsweise als Taster mit Schnappscheiben, Folientasten oder Federtasten ausgeführt. Ein Taster gemäss dem Oberbegriff des Anspruches 1 ist aus dem Dokument US2015/0097038A1.

Eine weitere Möglichkeit einen Taster zu realisieren besteht darin, diesen nach kapazitivem oder induktivem Prinzip auszuführen. Kapazitive Taster gemäß dem Stand der Technik besitzen keine mechanisch bewegbaren Komponenten. Sie bestehen aus zwei beabstandet und parallel zueinander angeordneten Elektroden, welche mit einer Hilfsspannung versorgt werden, und eine elektrische Kapazität besitzen. Die Elektroden werden auf Träger wie Glas oder Folien aufgebracht, und mit einer Auswerteeinheit abgetastet. Bei Berührung des Trägers des kapazitiven Tasters verändert sich die Kapazität. Diese Veränderung wird durch die Auswerteeinheit registriert. Induktive Taster benutzen aktive Eingabeelemente, welche ein magnetisches Feld generieren. In den leitenden Komponenten des Tasters wird durch dieses ein elektrischer Strom induziert, welcher durch die Auswerteinheit registriert wird.

Herkömmliche mechanische Taster weisen den Nachteil auf, dass insbesondere bei deren Anwendung an mobilen elektronischen Geräten Fehlbedienungen auftreten können, da diese häufig mechanischen Einflüssen ausgesetzt sind. Zusätzliche Abschirmungen oder Schutzhüllen, um dies zu vermeiden, erhöhen den Platzbedarf des Geräts, was oftmals nicht gewünscht ist.

Kapazitive oder induktive Taster beinhalten den Nachteil, dass diese nur unter Versorgung mit einer Hilfsspannung funktionsfähig sind. Bei einer Anwendung in mobilen elektronischen Geräten führt dies dazu, dass deren Betriebsdauer erheblich gesenkt wird, vor allem bei beschränkten Akkukapazitäten. Außerdem ist dieser Typ von Taster ebenfalls anfällig für Fehlbedienungen durch unbeabsichtigte Berührungen.

Zudem besitzen Taster nach dem Stand der Technik den Nachteil, dass diese Bedienelemente darstellen, welche nur eine einzige Eingabemöglichkeit besitzen. Sie können nur eine simple Information liefern, welche aussagt, dass der Taster zu einem gewissen Zeitpunkt gedrückt ist, oder nicht. Hierdurch sind die Anwendungsmöglichkeiten von Tastern gemäß dem Stand der Technik an modernen elektronischen Geräten stark eingeschränkt, bei einem zudem vergleichsweise hohen Platzbedarf.

Es ist die Aufgabe der Erfindung einen Taster zu bilden, der die oben angeführten Nachteile überwindet.

Erfindungsgemäß wird die vorliegende Aufgabe dadurch gelöst, dass der Taster einen dritten Schaltkontakt umfasst, welcher zum zweiten Schaltkontakt beabstandet und parallel auf einer dem ersten Schaltkontakt gegenüberliegenden Seite angeordnet ist, wobei der dritte Schaltkontakt ausgebildet ist, unter Krafteinwirkung eine elektrische Leitungsverbindung mit dem zweiten Schaltkontakt herzustellen, und der Taster eine Auswerteinheit umfasst, welche ausgebildet ist, den ersten und/oder den dritten Schaltkontakt zusätzlich als kapazitiven oder induktiven Berührungssensor zu betreiben.

Die erfindungsgemäße Ausgestaltung des Tasters bietet den Vorteil, dass diese zu einem Taster führt, welcher im Vergleich zu Tastern gemäß dem Stand der Technik eine wesentlich höhere Anzahl an Eingabemöglichkeiten besitzt. Der erste und der dritte Schaltkontakt können nach außen leitend oder nicht leitend, beispielsweise unter einer flexiblen Folie, ausgeführt sein, sodass eine Taste gebildet wird. An einem erfindungsgemäßen Taster können somit anstatt einer einzigen Eingabemöglichkeit (der Taster wird gerade gedrückt, bzw. nicht gedrückt) zusätzliche Eingabemöglichkeiten realisiert werden. Diese gliedern sich wie folgt:
- Druck auf den ersten Schaltkontakt
- Druck auf den dritten Schaltkontakt
- Berührung des ersten Schaltkontakts
- Berührung des dritten Schaltkontakts

Besonders vorteilhaft ist hierbei, dass eine Kombination der oben genannten Eingabemöglichkeiten genutzt werden kann, um kombinierte Eingabemethoden zu erzeugen, wie beispielsweise ein gleichzeitiger Druck auf den ersten sowie den dritten Schaltkontakt, beziehungsweise eine gleichzeitige Berührung des ersten sowie des dritten Schaltkontakts. Der erfindungsgemäße Taster bietet somit im Vergleich zu Tastern gemäß dem Stand der Technik den Vorteil, dass dieser ein Bedienelement darstellt, welches bei gleichem Platzbedarf wesentlich umfangreichere Nutzungsmöglichkeiten umfasst.

Ein weiterer Vorteil besteht darin, dass der erfindungsgemäße Taster nicht kontinuierlich mit einer Hilfsspannung versorgt werden muss, sondern diese erst durch einen Druck auf den ersten oder den dritten Schaltkontakt, bzw. gleichzeitig auf den ersten Schaltkontakt und den dritten Schaltkontakt aktiviert werden kann. Hierdurch wird erreicht, dass der erfindungsgemäße Taster keinen ständigen Stromverbrauch aufweist, wodurch die Betriebsdauer von mobilen Geräten, an welchen dieser eingesetzt wird, verlängert wird. Zudem wird eine mögliche Fehlbedienung verhindert oder zumindest die Wahrscheinlichkeit für eine Fehlbedienung gesenkt.

Durch eine variable Ausgestaltung der Oberfläche des zweiten Schaltkontakts können unterschiedliche Abstände zwischen dem ersten Schaltkontakt und dem zweiten Schaltkontakt, sowie dem dritten Schaltkontakt und dem zweiten Schalktontakt realisiert werden. Hierdurch kann das haptische Feedback bei der Bedienung von erstem Schaltkontakt und drittem Schaltkontakt unterschiedlich gestaltet werden.

Die Schaltkontakte des erfindungsgemäßen Tasters können unter der Verwendung von beispielsweise Folien mit integrierten leitenden Elementen, Metalllamellen, FP, PCBA, usw. realisiert werden. Hierdurch ergibt sich der Vorteil, dass erfindungsgemäße Taster eine sehr geringe Bauhöhe aufweisen können, wodurch sich diese besonders zur Verwendung in dünnen Plastikkarten wie Smartcards, Bankomatkarten oder Kreditkarten eignen. Weitere Anwendungsgebiete sind beispielsweise E-Ink basierte Anzeigen wie Preisschilder, Informationsschilder, Produktcodierungen oder IDs.

Eine bevorzugte Anwendung erfindungsgemäßer Taster findet sich in Smartcards zur Verwendung als Zahlungsmittel. Dies sind dünne Karten, welche einen, in der Regel aus Plastik hergestellten, Kartenkörper aufweisen, und eine Anzahl aktiver und inaktiver Eingabe- und Ausgabeelemente, Datenspeicher, sowie Identifikations- und Übertragungsvorrichtungen wie Drahltlosnetzwerkschnittstellen, RF-ID (Radio Frequency Identification) Antennen oder NFC (Near Field Communication) Einheiten beinhalten können, sowie ein Secure Element aufweisen. Eine Verwendung solcher aktiver Elemente setzt eine eigenständige Energieversorgung in der Form dünner Akkumulatoren zu deren Betrieb voraus. Durch die begrenzten Abmessungen derartiger Smartcards, welche in der Regel im Kreditkartenformat produziert werden, ist die Speicherkapazität dieser Energiespeichereinheiten allerdings stark begrenzt. Das geringe Platzangebot führt außerdem dazu, dass bevorzugt Eingabeelemente verwendet werden, welche einen geringen Platzbedarf aufweisen, bei einer gleichzeitig umfangreichen Anzahl an Eingabemöglichkeiten und geringem Energiebedarf. Diese Eigenschaften werden durch einen erfindungsgemäßen Taster vorteilhafterweise zur Verführung gestellt. Ein Weiterer Vorteil der Verwendung erfindungsgemäßer Taster an einer derartigen Smartcard ist, dass diese ebenfalls zum Ein- und Ausschalten der Smartcard verwendet werden können, sodass diese bei Nichtbenutzung keinen Energieverbrauch aufweist. Besonders Vorteilhaft ist hierbei, dass die Smartcard im ausgeschalteten Zustand außerdem nicht ausgelesen werden kann.

Einer wie zuvor beschrieben ausgeführte Smartcard ist es möglich, die Funktion einer Reihe an Bankomatkarten und Kreditkarten in sich zu vereinen, indem der Smartcard eine eindeutige Kartennummer und eine Reihe an Folgenummern zugewiesen wird. Diese Folgenummern können verwendet werden, um eine bestimmte Bankomatkarte oder Kreditkarte zu identifizieren. Die Zuordnung einer bestimmten Bankomatkarte oder Kreditkarte wird hierzu im Datenspeicher der Smartcard sowie einem Netzwerkdatenspeicher gespeichert. Einem Benutzer wird hierdurch vorteilhaferweise, unter Verwendung eines oder mehrerer erfindungsgemäßer Taster, ermöglicht eine bestimmte Bankomatkarte oder Kreditkarte für eine Zahlung direkt an der Smartcard auszuwählen. In einem Verfahren zur Zahlungsabwicklung werden die Kartennummer der Smartcard sowie die, der jeweils ausgewählten Bankomatkarte oder Kreditkarte zugeordneten Folgenummer an ein Zahlungsdienstleistersystem übermittelt. Dieses kann auf den Netzwerkspeicher zugreifen, und die Zuordnung der ausgewählten Bankomatkarte bzw. Kreditkarte zu der jeweiligen Folgenummer der Smartcard ermitteln. Somit kann der Zahlungsvorgang dann über die ausgewählte Bankomatkarte bzw. Kreditkarte abgewickelt werden.

Vorteilhafte Ausgestaltungen des erfindungsgemäßen Tasters, sowie alternative Ausführungsvarianten werden in weiterer Folge anhand der Figuren näher erläutert.
Figur 1 zeigt eine Darstellung eines Schnitts durch einen erfindungsgemäßen Taster.
Figur 2 zeigt eine Darstellung einer Smartcard mit einem erfindungsgemäßen Taster.
Figur 3 zeigt ein Ablaufdiagramm eines Verfahrens zur Verwendung einer Smartcard gemäß Figur 2 zur Übermittlung von Zahlungsinformationen.

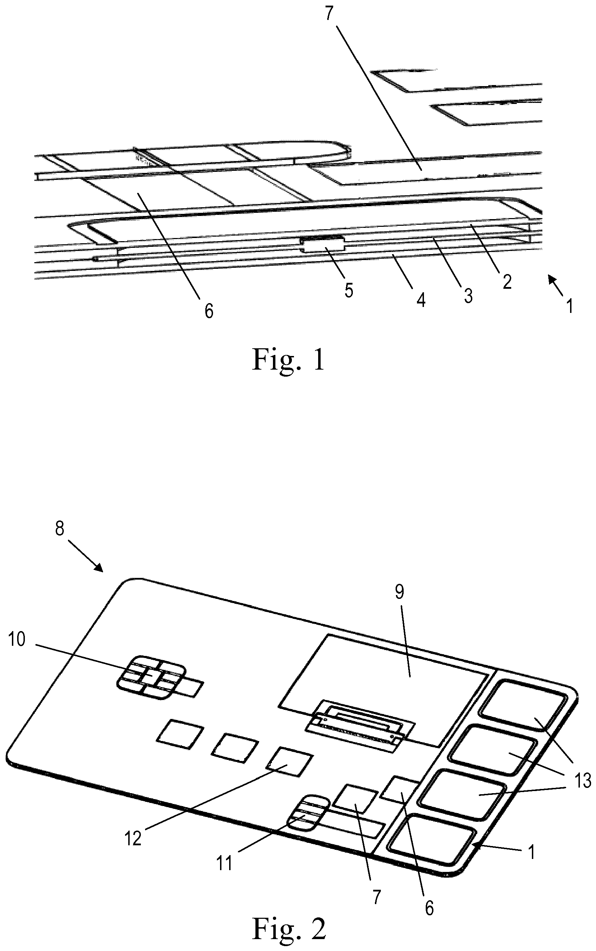

Figur 1 zeigt einen vertikalen Schnitt durch einen erfindungsgemäßen Taster 1 in einer perspektivischen Ansicht in einer bevorzugten Ausführungsvariante. Der Taster 1 besteht aus einem ersten Schaltkontakt 2, einem zweiten Schaltkontakt 3 sowie einem dritten Schaltkontakt 4, welche parallel zueinander angeordnet sind, und sich, in einem dargestellten Ausgangszustand des Tasters 1, nicht berühren. Der zweite Schaltkontakt 3 ist zwischen dem ersten 2 und dem dritten 4 Schaltkontakt angeordnet. Die Schaltkontakte können in der dargestellten bevorzugten Ausführungsvariante durch flexible Folien, Metalllamellen, FP, PCBA usw. ausgeführt sein, wobei die dem zweiten Schaltkontakt 3 gegenüberliegenden Seiten des ersten 2 sowie des dritten Schaltkontakts 4 elektrisch leitend oder nicht leitend ausgeführt sein können. Übt ein Benutzer des Tasters 1 eine Kraft auf den ersten Schaltkontakt 2 oder den dritten Schaltkontakt 4 aus, nähert sich der jeweilige Schaltkontakt an den zweiten Schaltkontakt 3 an bis er diesen berührt, und stellt in einem metastabilen Zustand eine elektrische Leitungsverbindung her, über welche Strom fließen kann. Endet die Krafteinwirkung, geht der Taster 1 wieder in den Ausgangszustand über, und die Leitungsverbindung wird getrennt. Diese, in Figur 1 dargestellte, erfindungsgemäße Anordnung der Schaltkontakte 2, 3 und 4 ermöglicht vorteilhafterweise eine beidseitige Bedienung des erfindungsgemäßen Tasters 1.

In der in Figur 1 dargestellten bevorzugten Ausführungsvariante verfügt der Taster 1 über eine Verdickung oder Erhöhung 5 in der Mitte des zweiten Schaltkontakts 3. Diese vermindert den Abstand vom zweiten Schaltkontakt 3 zum ersten 2, bzw. dritten Schaltkontakt 4. Hierdurch wird der Vorteil erreicht, dass auf simple Art die Kraft, welche zur Bedienung des Tasters 1 notwendig ist variiert werden kann. In alternativen Ausführungsvarianten kann diese Verdickung oder Erhöhung 5 an unterschiedlichen Stellen auf der dem ersten Schaltkontakt 2, bzw. der dem dritten Schaltkontakt 4 zugeordneten Seite des zweiten Schaltkontakts 3 ausgeformt sein.

Des Weiteren können hierdurch unterschiedliche Abstände zum ersten 2 und zum dritten Schaltkontakt 4 realisiert werden. Vorteilhafterweise ist es somit möglich für die Bedienung des ersten 2 oder der dritten Schaltkontakts 4 dem Benutzer ein unterschiedliches haptisches Feedback zur Verfügung zu stellen.

Der in Figur 1 dargestellte Taster 1 verfügt des Weiteren über eine Auswerteeinheit 6, sowie eine Energiespeichereinheit 7. Die Energiespeichereinheit 7 stellt eine Hilfsspannung zur Verfügung, welche der Auswerteeinheit 6 ermöglicht, Berührungen des Tasters 1 auf kapazitiver bzw. induktiver Basis zu registrieren. In einer alternativen Ausführungsvariante wird die Hilfsspannung mittels einer Stromquelle, wie beispielsweise einem Netzteil zur Verfügung gestellt.

Die Integration der Auswerteeinheit 6 in den erfindungsgemäßen Taster 1 ermöglicht den Betrieb des Tasters 1 als beidseitig bedienbaren induktiven oder kapazitiven Berührungssensor, zusätzlich zu dessen Eigenschaften als beidseitig bedienbarer mechanischer Taster. Hierdurch ergibt sich der Vorteil, dass mit einem einzigen Taster 1 zusätzliche Eingabemöglichkeiten realisiert werden können. In alternativen Ausführungsvarianten kann auch nur der erste Schaltkontakt 2 oder nur der dritte Schaltkontakt 4 als Berührungssensor betrieben werden.

Die in Figur 1 dargestellte Energiespeichereinheit 7 kann einen betriebsbereiten Zustand, sowie einen nicht betriebsbereiten Zustand einnehmen. Ein Wechsel vom betriebsbereiten Zustand in den nicht betriebsbereiten Zustand, oder umgekehrt, kann durch einen gleichzeitigen Druck auf den ersten 2 und den dritten Schaltkontakt 4 durchgeführt werden. Hierdurch wird eine Leitungsverbindung zwischen dem ersten 2, dem zweiten 3 und dem dritten Schaltkontakt 4 hergestellt. Diese Funktion ermöglicht, dass die Energiespeichereinheit 7 nur bei Bedarf Hilfsspannung zum Betrieb des Tasters 1 als kapazitiven bzw. induktiven Berührungssensor zur Verfügung stellt. Hierdurch wird der Vorteil erreicht, dass eine Entladung der Energiespeichereinheit 7 bei Nichtbenutzung des Tasters 1 verhindert wird. In alternativen Ausführungsvarianten kann der Wechsel zwischen dem betriebsbereiten Zustand und dem nicht betriebsbereiten Zustand auch über einen Druck ausschließlich auf den ersten 2 oder den dritten Schaltkontakt 4, beziehungsweise eine beliebige Kombination der genannten Möglichkeiten realisiert werden. Bei einer Anwendung des erfindungsgemäßen Tasters in elektronischen Geräten, kann diese Funktion dazu genutzt werden, ein unbeabsichtigtes Einschalten des jeweiligen Geräts zu verhindern und somit die Einschaltsicherheit zu erhöhen.

Figur 2 zeigt eine perspektivische Ansicht einer Smartcard 8, welche einen erfindungsgemäßen Taster 1 gemäß Figur 1, mit zugehöriger Auswerteeinheit 6 und Energiespeichereinheit 7 beinhaltet. Die Smartcard 8 weist zusätzlich ein Display 9, ein Secure Element 10, eine Identifikations- und Übertragungsvorrichtung 11, einen Datenspeicher 12, sowie drei Eingabeelemente 13 auf. Die Eingabeelemente 13 können entweder ebenfalls als erfindungsgemäße Taster 1 ausgeführt sein, oder in alternativen Ausführungsvarianten als mechanische Taster, induktive Berührungssensoren oder kapazitive Berührungssensoren oder eine beliebige Kombination davon. Die Identifikations- und Übertragungsvorrichtung 11 kann als RFID Antenne, als NFC Modul oder eine beliebige weitere Vorrichtung zur drahtlosen, oder kontaktgebundenen Kommunikation ausgeführt sein. Das Display 9 kann als herkömmliches LCD Display, E-Ink oder ähnliches Display ausgeführt sein. Des Weiteren kann es berührungsempfindlich ausgeführt sein. Die Energiespeichereinheit 7 des Tasters 1 wird genutzt, um die weiteren Komponenten der Smartcard 8 mit Strom zu versorgen. Durch die vorteilhafte Ausgestaltung des Tasters 1 ist es somit, wie unter Figur 1 beschrieben, möglich die Energiespeichereinheit 7 in den betriebsbereiten Zustand, sowie den nicht betriebsbereiten Zustand zu versetzen und somit die gesamte Smartcard 8 ein- bzw. auszuschalten. Hierdurch wird der Vorteil erreicht, dass eine Entladung der Energiespeichereinheit 7 bei Nichtbenutzung der Smartcard 8 verhindert wird. Auch ein Auslesen der Smartcard 8 wird somit verhindert. In einer weiteren Ausführungsvariante können mehrere erfindungsgemäße Taster 1 an einer Smartcard 8 verwendet werden. Hierdurch kann die Einschaltsicherheit zusätzlich erhöht werden, indem es beispielsweise notwenig ist mehrere Taster 1 gleichzeitig zu bedienen um die Energiespeichereinheit 7 in den betriebsbereiten Zustand zu versetzen. Des Weiteren kann dies genutzt werden, um bestimmte Sicherheitsfunktionen durch die kombinierte Bedienung verschiedener Taster 1 abzurufen. Durch den besonders dünnen Aufbau der Taster 1 wird beispielsweise ermöglicht, dass diese nebeneinander, oben und unten an einem Gerät wie der beschriebenen Smartcard 8, angeordnet werden. Hierdurch kann eine besonders ergonomische Gestaltung der Positionen der Taster 1 erzielt werden. Dies eröffnet die Möglichkeit, beispielsweise durch Auflegen der Smartcard 8 auf einen ebenen Untergrund nur eine Seite der Taster 1 entweder durch Berührung oder durch Krafteinwirkung bzw. Drücken zu bedienen.

Der in Figur 2 dargestellten Smartcard 8 ist in der bevorzugten Ausführungsvariante eine Kartennummer zugeordnet, über welche die Smartcard 8 eindeutig identifiziert werden kann. Dieser Kartennummer ist in weiterer Folge eine Anzahl an Folgenummern zugeordnet. Dies ergibt den Vorteil, dass die Smartcard 8 eine eindeutige Identifikation aufweist, wobei verschiedene, in weiterer Folge beschriebene, Betriebsmodi der Smartcard den Folgenummern zugeordnet werden können.

Die Anwendung von einem oder, in alternativen Ausführungsvarianten, mehreren erfindungsgemäßen Tastern 1 in der in Figur 2 dargestellten Smartcard 8 ermöglicht vorteilhafterweise eine Reihe an verschiedenen Eingabemöglichkeiten. Wird die Smartcard 8 auf einen flachen Untergrund gelegt, können beispielsweise entweder der erste 2 oder der dritte Schaltkontakt 4 des jeweilig benutzten Tasters 1 unabhängig voneinander gedrückt, beziehungsweise berührt werden. Dies kann beispielsweise genutzt werden, um PIN Codes oder Entsperrcodes einzugeben, welche unbefugte Benutzer davon abhalten die Smartcard 8 zu verwenden.

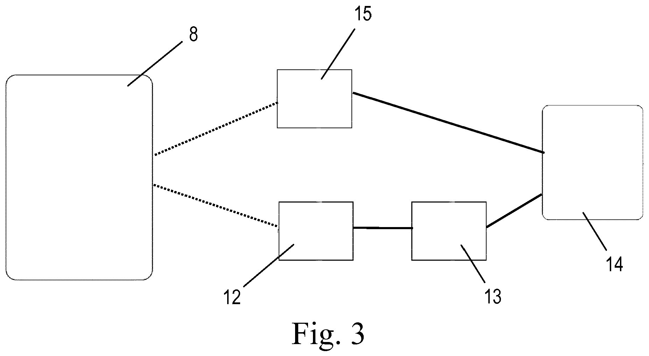

Figur 3 zeigt ein Ablaufdiagramm eines Verfahrens zur Verwendung einer Smartcard 8 gemäß Figur 2 zur Übermittlung von Zahlungsinformationen. Die Identifikations- und Übertragungsvorrichtung 11, der in Figur 2 dargestellten Smartcard 8, ist in einer bevorzugten Ausführungsvariante dazu eingerichtet, mit einer Kartenlesevorrichtung 12 zu kommunizieren, bzw. mit dieser verbindbar zu sein. Eine Kartenlesevorrichtung 12 kann ein beliebiger Verkaufsterminal, eine Bankomatkarten- oder Kreditkartenlesevorrichtung sein, mit welcher Zahlungsvorgänge abgewickelt werden können. Diese ist dazu eingerichtet auf ein Zahlungsdienstleistersystem 13 zuzugreifen, welches auf einen Netzwerkdatenspeicher 14 zugreifen kann. Die Identifikations- und Übertragungsvorrichtung 11 überträgt nach der Verbindung der Smartcard 8 mit der Kartenlesevorrichtung 12 die Kartennummer, sowie eine Folgenummer an die Kartenlesevorrichtung 12.

Hierdurch kann die Smartcard 8 verwendet werden, um Zahlungsvorgänge abzuwickeln, wobei diese die Funktion mehrerer Bankomatkarten und Kreditkarten in sich vereinen kann. Hiezu wird eine Abfolge von Initialisierungsschritten ausgeführt. Diese bestehen darin, eine der Folgenummern der Kartennummer der Smartcard 8 einer ausgewählten Bankomartkarte bzw. deren Bankomatkartennummer, oder einer Kreditkarte bzw. deren Kreditkartennummer zuzuordnen, und diese Zuordnung im Datenspeicher 12 der Smartcard 8, sowie dem Netzwerkdatenspeicher 14 zu hinterlegen. Der Netzwerkdatenspeicher 14 ist ein Speicher, welcher über ein Datennetzwerk wie beispielsweise das Internet abrufbar ist.
Die Zuordnung erfolgt mittels Verbindung der Smartcard 8 mit einer Rechnereinheit 15, wie beispielsweise einem Smartphone, Tablet, Laptop, oder Desktopcomputer. Durch die Verbindung mit der Smartcard 8 erlangt die Rechnereinheit 15 Zugriff auf den Datenspeicher 12 der Smartcard 8. Des Weiteren verfügt die Rechnereinheit 15 Zugriff auf das Datennetzwerk, und somit den Netzwerkdatenspeicher 14. Die Rechnereinheit 15 führt ein Verarbeitungsprogramm aus, welches einem Benutzer der Smartcard 8 erlaubt die Zuordnung zu treffen, wobei das Verarbeitungsprogramm diese im Datenspeicher 12 der Smartcard 8, sowie dem Netzwerkdatenspeicher 14 speichert.

Eine Verbindung von Smartcard 8 mit der Rechnereinheit 15 ist nur zum Zweck der Ausführung der Initialisierungsschritte erforderlich. Sind diese erfolgt, ist die Smartcard 8 eigenständig zur Übermittlung von Zahlungsinformationen in der Lage. Hierzu wählt der Benutzer der Smartcard 8 direkt mittels der Smartcard 8 eine zuvor im Rahmen der Initialisierungsschritte initialisierte Bankomatkarte oder Kreditkarte aus. Die Identifikations- und Übertragungsvorrichtung 11 überträgt in weiterer Folge die Kartennummer der Smartcard 8, und die der ausgewählten Bankomatkarte oder Kreditkarte zuvor zugeordnete Folgenummer an die Kartenlesevorrichtung 1. Diese übermittelt die Kartennummer und die Folgenummer an das Zahlungsdienstleistersystem 13. Das Zahlungsdienstleistersystem 13 greift auf den Netzwerkdatenspeicher 14 zu, um die Zuordnung der Folgenummer zur vom Benutzer gewählten Bankomtkarte oder Kreditkarte abzurufen. Hierdurch erhält das Zahlungsdienstleistersystem 13 Informationen darüber welches, der Bankomatkarte oder Kreditkarte zugeordnete Konto mit dem Zahlungsvorgang zu belasten ist.

In einer alternativen Ausführungsvariante wird im Fall der Auswahl einer Bankomatkarte zur Abwicklung des Zahlungsvorganges durch den Benutzer, die Bankomatkartennummer der ausgewählten Bankomatkarte direkt durch die Smartcard 8 an die Kartenlesevorrichtung 12 übermittelt. Die Bankomatkarte wird in weiterer Folge direkt mittels des Secure Elements 10 durch die Kartenlesevorrichtung 12 identifiziert.

Dieses Verfahren bietet den Vorteil, dass hierdurch die Smartcard 8 die Funktion von mehreren Bankomatkarten und Kreditkarten übernehmen kann.

## Patentansprüche

1. Taster (1), umfassend einen ersten Schaltkontakt (2) und einen zweiten Schaltkontakt (3), welche voneinander beabstandet und parallel zueinander angeordnet sind,
wobei der erste Schaltkontakt (2) ausgebildet ist, sich unter Krafteinwirkung an den zweiten Schaltkontakt (3) anzunähern, bis er diesen berührt, und eine elektrische Leitungsverbindung mit dem zweiten Schaltkontakt (3) herzustellen, wobei der Taster (1) einen dritten Schaltkontakt (4) umfasst, welcher zum zweiten Schaltkontakt (3) beabstandet und parallel auf einer dem ersten Schaltkontakt (2) gegenüberliegenden Seite angeordnet ist, **dadurch gekennzeichnet,**
**dass** der dritte Schaltkontakt (4) ausgebildet ist, sich unter Krafteinwirkung an den zweiten Schaltkontakt (3) anzunähern, bis er diesen berührt, und eine elektrische Leitungsverbindung mit dem zweiten Schaltkontakt (3) herzustellen,
und der Taster (1) eine Auswerteinheit (6) umfasst,
welche ausgebildet ist, den ersten (2) und/oder den dritten Schaltkontakt (4) zusätzlich als kapazitiven oder induktiven Berührungssensor zu betreiben.

2. Taster (1) gemäß Anspruch 1, **dadurch gekennzeichnet, dass** der Taster (1) eine Energiespeichereinheit (7) umfasst, welche einen betriebsbereiten Zustand, in welchem die Energiespeichereinheit (7) die Auswerteeinheit (6) mit Spannung versorgt, sowie einen nicht betriebsbereiten Zustand einnehmen kann.

3. Taster (1) gemäß Anspruch 2, **dadurch gekennzeichnet, dass** eine Krafteinwirkung sowohl auf den ersten Schaltkontakt (2) als auch den dritten Schaltkontakt (4) eine Leitungsverbindung zwischen dem ersten (2), dem zweiten (3) und dem dritten Schaltkontakt (4) herstellt, und die Energiespeichereinheit (7) vom nicht betriebsbereiten Zustand in den betriebsbereiten Zustand versetzt, oder vom betriebsbereiten Zustand in den nicht betriebsbereiten Zustand versetzt.

4. Taster (1) gemäß Anspruch 2, **dadurch gekennzeichnet, dass** eine Krafteinwirkung auf den ersten Schaltkontakt (2) oder auf den dritten Schaltkontakt (4) die Energiespeichereinheit (7) vom nicht betriebsbereiten Zustand in den betriebsbereiten Zustand versetzt, oder vom betriebsbereiten Zustand in den nicht betriebsbereiten Zustand versetzt.

5. Taster (1) gemäß einem der Ansprüche 1 bis 4, **dadurch gekennzeichnet, dass** der zweite Schaltkontakt (3) eine Verdickung oder Erhöhung (5) aufweist, welche einen Abstand vom zweiten Schaltkontrakt (3) zum ersten (2) und/oder zum dritten Schaltkontakt (4) verringert.

6. Taster (1) gemäß einem der Ansprüche 1 bis 4, **dadurch gekennzeichnet, dass** die Abstände des ersten Schaltkontakts (2) zum zweiten Schaltkontakt (3), sowie des dritten Schaltkontakts (4) zum zweiten Schaltkontakt (3) unterschiedlich groß sind.

7. Smartcard (8), umfassend zumindest einen Taster (1) gemäß einem der Ansprüche 2 bis 6, **dadurch gekennzeichnet, dass** der Smartcard (8) eine Kartennummer, sowie eine Mehrzahl an Folgenummern zugeordnet ist.

8. Smartcard (8) gemäß Anspruch 7, **dadurch gekennzeichnet, dass** die Smartcard (8) des Weitern zumindest eines aus einer Identifikations- und Übertragungsvorrichtung (11), einem Secure Element (10), einem Datenspeicher (12), einem Display (9), einem induktiven Berührungssensor, sowie einem kapazitiven Berührungssensor umfasst, wobei die Identifikations- und Übertragungsvorrichtung (11) mit einer Kartenlesevorrichtung (12) verbindbar ist, welche ausgebildet ist, auf ein Zahlungsdienstleistersystem (13) zuzugreifen, welches ausgebildet ist, auf einen Netzwerkdatenspeicher (14) zuzugreifen.

9. Verwendung einer Smartcard (8) gemäß Anspruch 8 zur Übermittlung von Zahlungsinformationen, umfassend:
die Initialisierungsschritte:
- Zuordnen jeweils einer Folgenummer der Kartennummer der Smartcard (8) zu einer Kreditkartennummer oder Bankomatkartennummer, und
- Speichern dieser Zuordnung im Datenspeicher (12) der Smartcard (8), sowie in dem Netzwerkdatenspeicher (14) welcher über ein Datennetzwerk abrufbar ist;
und die Betriebsschritte:
- Auswählen einer Kreditkartennummer oder Bankomatkartennummer durch einen Benutzer der Smartcard (8) mittels der Smartcard (8),
- Übermitteln der Kartennummer der Smartcard (8), und der der ausgewählten Bankomatkartennummer oder Kreditkartennummer zugeordneten Folgenummer durch die Identifikations- und Übertragungsvorrichtung (11) an die Kartenlesevorrichtung (12),
- Übermitteln der Kartennummer der Smartcard (8) und der Folgenummer durch die Kartenlesevorrichtung (12) an das Zahlungsdienstleistersystem (13), und
- Abfragen der der übermittelten Folgenummer zugeordneten Kreditkartennummer oder Bankomatkartennummer durch das Zahlungsdienstleistersystem (13) auf dem Netzwerkdatenspeicher (14).

10. Verwendung einer Smartcard (8) gemäß Anspruch 9, **dadurch gekennzeichnet, dass** das Zuordnen der Folgenummer der Kartennummer der Smartcard (8) durch Verbinden der Smartcard (8) mit einer Rechnereinheit (15) erfolgt, welche Zugriff auf den Datenspeicher (12) der Smartcard (8) sowie den Netwerkdatenspeicher (14) besitzt, und ausgebildet ist ein Verwaltungsprogramm auszuführen, welches die Initialisierungsschritte gemäß Anspruch 9 abarbeitet.

## Claims

1. A push-button (1) comprising a first switch contact (2) and a second switch contact (3) which are arranged spaced apart and parallel to each other,
wherein the first switch contact (2) is designed for approaching the second switch contact (3) until it touches the latter and for establishing an electrical line connection to the second switch contact (3) when force is applied,
wherein the push-button (1) comprises a third switch contact (4) which is arranged spaced apart from the second switch contact (3) and in parallel on a side opposite to the first switch contact (2),
**characterized in that** the third switch contact (4) is designed for approaching the second switch contact (3) until it touches the latter and for establishing an electrical line connection to the second switch contact (3) when force is applied,
and the push-button (1) comprises an evaluation unit (6) which is designed for additionally operating the first (2) and/or the third switch contact(s) (4) as a capacitive or inductive touch sensor.

2. The Push-button (1) according to claim 1, **characterized in that** the push-button (1) comprises an energy storage unit (7) which can assume an operable state, in which the energy storage unit (7) supplies the evaluation unit (6) with voltage, and a non-operable state.

3. The Push-button (1) according to claim 2, **characterized in that** an application of force both onto the first switch contact (2) and onto the third switch contact (4) establishes a line connection between the first (2), the second (3) and the third switch contact (4) and brings the energy storage unit (7) from the non-operable state into the operable state, or from the operable state into the non-operable state.

4. The Push-button (1) according to claim 2, **characterized in that** an application of force onto the first switch contact (2) or onto the third switch contact (4) brings the energy storage unit (7) from the non-operable state into the operable state, or from the operable state into the non-operable state.

5. The Push-button (1) according to any of claims 1 to 4, **characterized in that** the second switch contact (3) exhibits a thickening or elevation (5) which reduces a distance from the second switch contact (3) to the first (2) and/or the third switch contact (4).

6. The Push-button (1) according to any of claims 1 to 4, **characterized in that** the distances of the first switch contact (2) to the second switch contact (3) as well as of the third switch contact (4) to the second switch contact (3) are differently sized.

7. A smart card (8) comprising at least one push-button (1) according to any of claims 2 to 6, **characterized in that** a card number as well as a plurality of sequence numbers are allocated to the smart card (8).

8. The Smart card (8) according to claim 7, **characterized in that** the smart card (8) furthermore comprises at least one of an identification and transmission device (11), a secure element (10), a data memory (12), a display (9), an inductive touch sensor as well as a capacitive touch sensor, wherein the identification and transmission device (11) can be connected to a card reading device (12), which is designed for accessing a payment service provider system (13), which is designed for accessing a network data storage (14).

9. Use of a smart card (8) according to claim 8 for the transmission of payment information, comprising:
the initialization steps:
- allocation of, in each case, one sequence number of the card number of the smart card (8) to a credit card number or bank card number, and
- storing of said allocation in the data memory (12) of the smart card (8) as well as in the network data storage (14), which is accessible via a data network;
and the operation steps:
- selection of a credit card number or bank card number by a user of the smart card (8) by means of the smart card (8),
- transmission of the card number of the smart card (8) and of the sequence number allocated to the selected bank card number or credit card number by the identification and transmission device (11) to the card reading device (12),
- transmission of the card number of the smart card (8) and of the sequence number by the card reading device (12) to the payment service provider system (13), and
- retrieval of the credit card number or bank card number allocated to the transmitted sequence number by the payment service provider system (13) on the network data storage (14).

10. The use of a smart card (8) according to claim 9, **characterized in that** the allocation of the sequence number of the card number of the smart card (8) is effected by connecting the smart card (8) to a computer unit (15), which has access to the data memory (12) of the smart card (8), as well as to the network data storage (14) and is designed for executing a processing program which implements the initialization steps according to claim 9.

## Revendications

1. Bouton-poussoir (1), comprenant un premier contact de commutation (2) et un deuxième contact de commutation (3), qui sont disposés à distance l'un de l'autre et parallèlement l'un à l'autre,
dans lequel le premier contact de commutation (2) est configuré pour se rapprocher du deuxième contact de commutation (3) sous l'action d'une force, jusqu'à ce qu'il touche celui-là, et pour établir une liaison conductrice électrique avec le deuxième contact de commutation (3),
dans lequel le bouton-poussoir (1) comprend un troisième contact de commutation (4), qui est disposé à distance du deuxième contact de commutation (3) et parallèlement sur un côté opposé au premier contact de commutation (2),
**caractérisé en ce que** le troisième contact de commutation (4) est configuré pour se rapprocher du deuxième contact de commutation (3) sous l'action d'une force, jusqu'à ce qu'il touche celui-là, et pour établir une liaison conductrice électrique avec le deuxième contact de commutation (3), et le bouton-poussoir (1) comprend une unité d'évaluation (6), qui est configurée pour faire fonctionner le premier (2) et/ou le troisième (4) contact de commutation en plus comme détecteur de contact capacitif ou inductif.

2. Bouton-poussoir (1) selon la revendication 1, **caractérisé en ce que** le bouton-poussoir (1) comprend une unité d'accumulation d'énergie (7) qui peut prendre un état apte à fonctionner, dans lequel l'unité d'accumulation d'énergie (7) alimente l'unité d'évaluation (6) avec une tension, et un état inapte à fonctionner.

3. Bouton-poussoir (1) selon la revendication 2, **caractérisé en ce que** l'action d'une force aussi bien sur le premier contact de commutation (2) que sur le troisième contact de commutation (4) établit une liaison conductrice entre le premier (2), le deuxième (3) et le troisième (4) contacts de commutation, et déplace l'unité d'accumulation d'énergie (7) de l'état inapte à fonctionner à l'état apte à fonctionner, ou la déplace de l'état apte à fonctionner à l'état inapte à fonctionner.

4. Bouton-poussoir (1) selon la revendication 2, **caractérisé en ce que** l'action d'une force sur le premier contact de commutation (2) ou sur le troisième contact de commutation (4) déplace l'unité d'accumulation d'énergie (7) de l'état inapte à fonctionner à l'état apte à fonctionner, ou la déplace de l'état apte à fonctionner à l'état inapte à fonctionner.

5. Bouton-poussoir (1) selon l'une quelconque des revendications 1 à 4, **caractérisé en ce que** le deuxième contact de commutation (3) présente une surépaisseur ou une protubérance (5), qui réduit une distance du deuxième contact de commutation (3) au premier (2) et/ou au troisième (4) contact de commutation.

6. Bouton-poussoir (1) selon l'une quelconque des revendications 1 à 4, **caractérisé en ce que** les distances du premier contact de commutation (2) au deuxième contact de commutation (3) ainsi que du troisième contact de commutation (4) au deuxième contact de commutation (3), sont de grandeur différente.

7. Carte à puce (8), comprenant au moins un bouton-poussoir (1) selon l'une quelconque des revendications 2 à 6, **caractérisée en ce qu'**un numéro de carte, ainsi qu'une multiplicité de numéros de séquence, sont associés à la carte à puce (8).

8. Carte à puce (8) selon la revendication 7, **caractérisée en ce que** la carte à puce (8) comprend en outre au moins un composant parmi un dispositif d'identification et de transfert (11), un élément de sécurité (10), une mémoire de données (12), un affichage (9), un détecteur de contact inductif ainsi qu'un détecteur de contact capacitif, dans laquelle le dispositif d'identification et de transfert (11) peut être relié à un dispositif de lecture de carte (12), qui est configuré pour accéder à un système de prestataire de services de paiement (13), qui est configuré pour accéder à une mémoire de données de réseau (14).

9. Utilisation d'une carte à puce (8) selon la revendication 8 pour la transmission d'informations de paiement, comprenant :
les étapes d'initialisation :
- associer respectivement un numéro de séquence du numéro de carte de la carte à puce (8) à un numéro de carte de crédit ou un numéro de carte de banque, et
- mémoriser cette association dans la mémoire de données (12) de la carte à puce (8), ainsi que dans la mémoire de données de réseau (14) qui peut être appelée via un réseau de données;
et les étapes de fonctionnement :
- sélectionner un numéro de carte de crédit ou un numéro de carte de banque par un utilisateur de la carte à puce (8) au moyen de la carte à puce (8),
- transmettre le numéro de carte de la carte à puce (8) et le numéro de séquence associé au numéro de carte de banque ou au numéro de carte de crédit sélectionné, au moyen du dispositif d'identification et de transfert (11), au dispositif de lecture de carte (12),
- transmettre le numéro de carte de la carte à puce (8) et le numéro de séquence au moyen du dispositif de lecture de carte (12) au système de prestataire de services de paiement (13), et
- consulter le numéro de carte de crédit ou le numéro de carte de banque associé au numéro de carte transmis, par le système de prestataire de services de paiement (13), sur la mémoire de données de réseau (14).

10. Utilisation d'une carte à puce (8) selon la revendication 9, **caractérisée en ce que** l'association du numéro de séquence au numéro de carte de la carte à puce (8) est effectuée par la connexion de la carte à puce (8) à une unité d'ordinateur (15), qui a accès à la mémoire de données (12) de la carte à puce (8) ainsi qu'à la mémoire de données de réseau (14), et qui est configurée pour exécuter un programme de gestion, qui effectue les étapes d'initialisation selon la revendication 9.
